# EUROPEAN PATENT SPECIFICATION

(11) **EP 2 418 888 B1**
(45) Date of publication and mention of the grant of the patent: **02.10.2013**
(21) Application number: 11188439.1
(22) Date of filing: 11.01.2008
(51) Int. Cl.: H04W 24/00, H04L 1/20

(54) **Method and apparatus for measuring interference in wireless stations**
Verfahren und Vorrichtung zur Interferenzmessung in drahtlosen Stationen
Procédé et appareil pour mesurer une interférence dans des stations sans fil

(30) Priority: 12.01.2007 US 884775 P
(43) Date of publication of application: 15.02.2012
(62) Divisional of application: 10176197.1
(73) Proprietor: InterDigital Technology Corporation, Wilmington, DE 19809 (US)
(72) Inventor: Kwak, Joseph A., Momence, Illinois 60954 (US); Levy, Joseph S., Merrick, NY New York 11566 (US); Zuniga, Juan Carlos, Montreal, Québec H4L 3J4 (CA); Grandhi, Sudheer A., Pleasanton, CA California 94588 (US)
(74) Representative: Engdahl, Stefan

(56) References cited:
- EP-A2- 1 551 199
- US-A1- 2004 132 460
- US-A1- 2006 285 577

## Description

BACKGROUND

The carrier sense multiple access with collision avoidance (CSMA/CA) protocol for IEEE 802.xx communications requires each wireless station (STA) to determine that a channel is idle prior to transmitting. The physical (PHY) and medium access control (MAC) layers are tasked with sensing a channel prior to transmitting any frames. This is done using carrier sense mechanisms. Carrier sense mechanisms indicate whether a channel is busy when frames are detected on the channel or when radio-frequency (RF) power on the channel exceeds a certain threshold.

RF channel power detection is used to detect carriers from other users of the unlicensed channels which are not compatible with IEEE 802 standards. These carriers are considered interference for the STA. By detecting a carrier, the STA determines that the channel is busy and delays transmission. As a result, any source of RF interference power transmitted on an idle channel will prevent normal use of the channel and may have a negative impact on channel efficiency since the "busy" channel actually carries no data. If the source of RF interference power transmits during a busy channel, the signal to noise (S/N) ratio of the received frames changes, and frame errors and frame retransmissions are more likely. If the RF interference level falls below the STA's threshold for carrier sense the STA may transmit, however the RF interference may increase idle channel noise causing increased frame errors and frame retransmissions.

In IEEE 802 wireless networks, STAs are equipped to measure power within a wireless channel during idle periods. This idle channel measured power is the sum of thermal noise, interference from other STAs, and interference from non-wireless devices such as microwave ovens, other unlicensed industrial, scientific and medical (ISM) band users such as wireless phones, and other nearby sources of wideband radio-frequency interference (RFI) such as electric motors. Measurements of idle channel power include interference power from various interference sources, but do not provide an estimate of the magnitude of the interference sources because there is no base line for a channel without any interference.

Without a means to measure interference, the STA is unable to alert an access point (AP) or other network entities of changes, increases or decreases, in the perceived interference levels. Without such interference feedback from the STAs, the network is unable to make reasoned decisions for STA load balancing among APs, network frequency plans, and individual basic service set (BSS) channel selection. Furthermore, idle STAs are unable to autonomously alert an AP when local interference increases, causing increased delays for quality of service (QOS) service initiation as the AP tries, and retries, lower data rates until a sufficient QOS is established.

Direct measurement of interference requires control of the interference sources. Typically measurements of service quality or idle channel power are made with the sources of interference turned on, and then identical measurements are made with the sources of interference turned off. A quantified interference level may then be calculated from the differences in these direct measurements.

In a typical IEEE 802 wireless system, the STAs and APs are generally unable to control the sources of interference. Therefore, such a direct interference measurement is not possible.

Accordingly, a practical technique to indirectly measure or estimate interference in IEEE 802 systems is needed. Since STAs are unable to directly measure or estimate RF interference in the local environment, the capability to measure, or estimate, RF interference in a standardized manner would also be useful.
EP 1 551 199 A2 discloses a method and system for interference detection. An interference source may be identified when each measurement of a series of measurements indicates an RF source at the same frequency.

SUMMARY

Metrics for estimating RF interference may be derived from measurements of idle channel noise, channel utilization, medium access delay, STA throughput, BSS throughput and frame error rate. Further, metrics may be derived from the prior list of directly measured items in combination, as ratios and by rate of change analysis. RF interference is measured indirectly by measuring total idle channel power or by measuring changes in communication channel efficiency and frame errors.

RF interference measurements may also be based on various combinations of other direct measurements such as average noise power indicator (ANPI), STA data throughput, AP data throughput, STA medium access delay, node medium access delay, STA channel utilization, BSS channel utilization, and frame retransmission count. The detailed descriptions below describe the specific metrics for various useful combinations of these direct measurements, but other combinations are also possible.
The present invention is related to a method, according to claim 1, for detecting interference based on a difference value between two measured idle channel noise power values and a corresponding wireless STA according to claim 6.

BRIEF DESCRIPTION OF THE DRAWINGS

Figure 1 is a block diagram of a typical wireless system;

Figure 2 is a flow chart of a method for determining RF interference based on ANPI;

Figure 3 is a flow chart of another method for determining RF interference based on channel utilization;

Figure 4 is a flow chart of another method for determining RF interference based on medium access delay;

Figure 5 is a flow chart of another method for determining RF interference based on fragment error; and

Figure 6 is a flow chart of another method for determining RF interference based on throughput.

DETAILED DESCRIPTION

When referred to hereafter, the terminology "wireless transmit/receive unit (WTRU)" includes but is not limited to a user equipment (UE), a wireless station (STA), a fixed or mobile subscriber unit, a pager, a cellular telephone, a personal digital assistant (PDA), a computer, or any other type of user device capable of operating in a wireless environment. When referred to hereafter, the terminology "base station" includes but is not limited to a Node-B, a site controller, an access point (AP), or any other type of interfacing device capable of operating in a wireless environment.

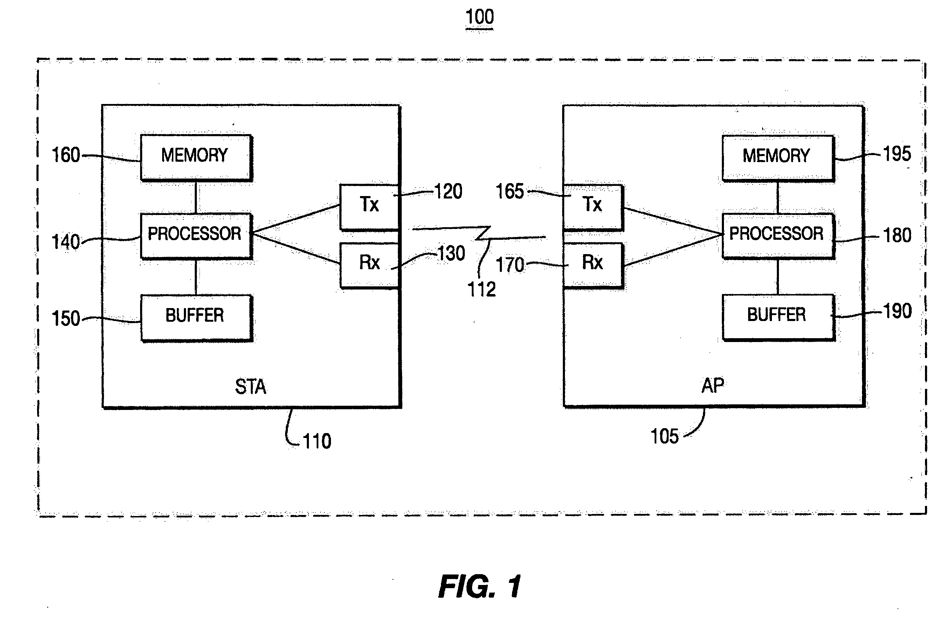

Figure 1 is a block diagram of a wireless communication system 100 configured to determine interference levels. The system includes an AP 105 and a wireless STA 110. The AP 105 and the STA 110 communicate via a wireless communication link, 112.

As shown in Figure 1, the STA 110 includes a transmitter 120, a receiver 130 and a processor 140. The processor 140 is attached to a buffer 150 and a memory 160. The processor 140 is configured to determine, or estimate RF interference using at least one technique described below.

Also shown in Figure 1, the AP 105 includes a transmitter 165, a receiver 170 and a processor 180. The processor 180 is attached to a buffer 190 and a memory 195. The processor 180 is configured to determine, or estimate, RF interference using at least one technique described below.

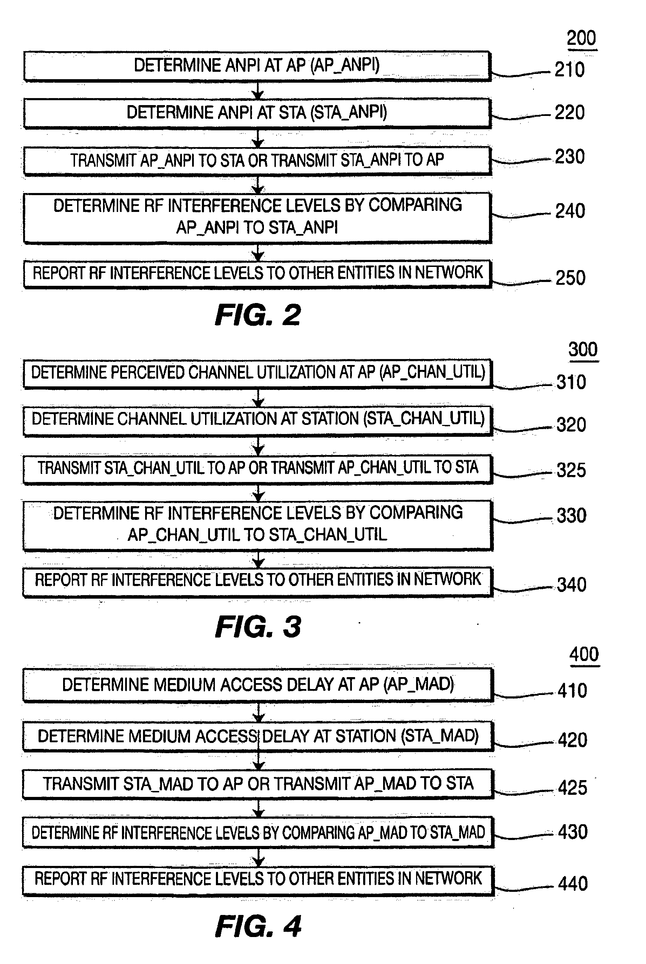

Figure 2 shows a flow diagram of a method 200 determining RF interference according to a first example useful for understanding the invention. First, the AP's average noise power indicator (AP_ANPI) is determined by constantly measuring the AP's perceived idle channel noise power and averaging it over a period of time (210). Then the STA's ANPI (STA_ANPI) is determined at the station (220). The AP then transmits the AP_ANPI to the STA, or the STA transmits the STA_ANPI to the AP (230). Then, the STA determines the presence of interference by comparing the STA_ANPI to the AP_ANPI (240).

When the STA measures a higher ANPI than the AP, it indicates that the STA is experiencing more RF interference than the AP and that RF interference power is equal to STA_ANPI minus AP_ANPI. When the STA measures a lower ANPI than the AP, it indicates the AP is experiencing more RF interference than the STA and that RF interference power is equal to AP_ANPI minus STA_ANPI. The ratio of these two ANPI measurements is equal to one when there is no RF interference at either the STA or the AP, or when the RF interference is the same at the STA and at the AP. Thus, the ratio of these two ANPI measurements may be used to indicate RF interference. A ratio > 1 indicates local RF interference at the STA, a ratio <1 indicates local RF interference at the AP. It should be noted that this metric is useful for low levels of RF interference only. Higher levels of RF interference which trigger the carrier sense mechanism will not be detectable using this metric. Optionally, the detection of RF interference onset, or termination of RF interference, may be reported to at least one other network entity, at 250.

In an embodiment, not pictured, a STA may measure interference by monitoring the rate of change of the STA_ANPI. A sudden increase in the ANPI value indicates the onset of a new RF interference source at that STA. The STA software may store ANPI values in the buffer and compare older ANPI values to the most recent ANPI value and subtract the difference. If the difference is greater (increasing ANPI) than a selected threshold value (in dB) for a selected time window (measurement time for recent measurement less measurement time for older measurement), RF interference onset is detected at that STA. If the difference is less (decreasing ANPI) than a selected threshold value (in -dB) for a selected time window (measurement time for recent measurement less measurement time for older measurement), RF interference termination is detected at that STA. The detection of RF interference onset or termination may be reported by the STA to the AP or other network entity.

Figure 3 shows a flow diagram of a method 300 determining RF interference according to another example useful for understanding the invention. First, the AP's perceived channel utilization (AP_Chan_Util) is determined (310). The AP's channel utilization measurement serves as a baseline channel metric for the AP describing the percentage of time the channel is busy. Next, the STA's channel utilization (STA_Chan_Util) is determined (320). The AP then transmits the AP_Chan_Util to the STA, or the STA transmits the STA_Chan_Util to the AP (325). Finally, the presence of interference is determined by comparing the STA_Chan_Util to the AP_Chan_Util (330).

If a STA measures a different STA_Chan_Util in the STA's local environment, this may indicate the presence or absence of RF interference as compared to the AP's environment. When the STA measures higher channel utilization than the AP, it indicates the STA's carrier sense mechanism is detecting more RF interference power than the AP or that the STA is in radio range of other wireless transmissions which are not detectable by the AP. When the STA measures lower channel utilization than the AP, it may indicate that the AP is experiencing more RF interference than the STA or that the STA is not in radio range of certain other STAs which are transmitting to the AP. The ratio of these two channel utilization measurements is equal to one when there is no RF interference at either the STA or the AP, or when the RF interference is the same at the STA and at the AP. Thus, the ratio of these two ANPI measurements may be used to indicate RF interference. A ratio > 1 indicates more local RF interference at the STA, and a ratio <1 indicates more local RF interference at the AP. It should be noted that this metric is useful for high levels of RF interference which trigger the STA carrier sense mechanisms. Optionally, the detection of RF interference onset, or termination of RF interference, may be reported to at least one other network entity, at 340.

Figure 4 shows a flow diagram of a method 400 determining RF interference according to another example useful for understanding the invention. First, the AP's medium access delay (AP_MAD) is determined (410). The AP's medium access delay serves as a baseline channel metric for the AP describing the average medium access delay for all downlink traffic in the basic service set. Next, the STA's MAD (STA_MAD) is determined (420). The STA_MAD is a measure of the MAD for STA's uplink. The AP then transmits the AP_MAD to the STA, or the STA transmits the STA_MAD to the AP (425). Finally, the presence of interference is determined by comparing the STA_MAD and the AP_MAD (430).

If a STA measures a different medium access delay (STA_MAD) in the STA's local environment for its uplink traffic, this may indicate the presence or absence of RF interference as compared to the BSS. When the STA measures a higher MAD than the AP, it indicates that the STA's carrier sense mechanism is detecting more RF interference power than the AP or that the STA is in radio range of other wireless transmissions which are not detectable by the AP. When the STA measures a lower MAD than the BSS, it may indicate that the AP is experiencing more RF interference than the STA or that the STA is not in radio range of certain other STAs which are transmitting to the AP. The ratio of these two channel MAD measurements is equal to 1 when there is no RF interference at either the STA or the AP, or when the RF interference is the same at the STA and at the AP. Thus, the ratio of these two MAD measurements may be used to indicate RF interference. A ratio > 1 indicates more local RF interference at the STA, a ratio <1 indicates more local RF interference at the AP. It should be noted that this method is useful for high levels of RF interference which trigger the STA's carrier sense mechanisms. Optionally, the detection of RF interference onset, or termination of RF interference, may be reported to at least one other network entity, at 440.

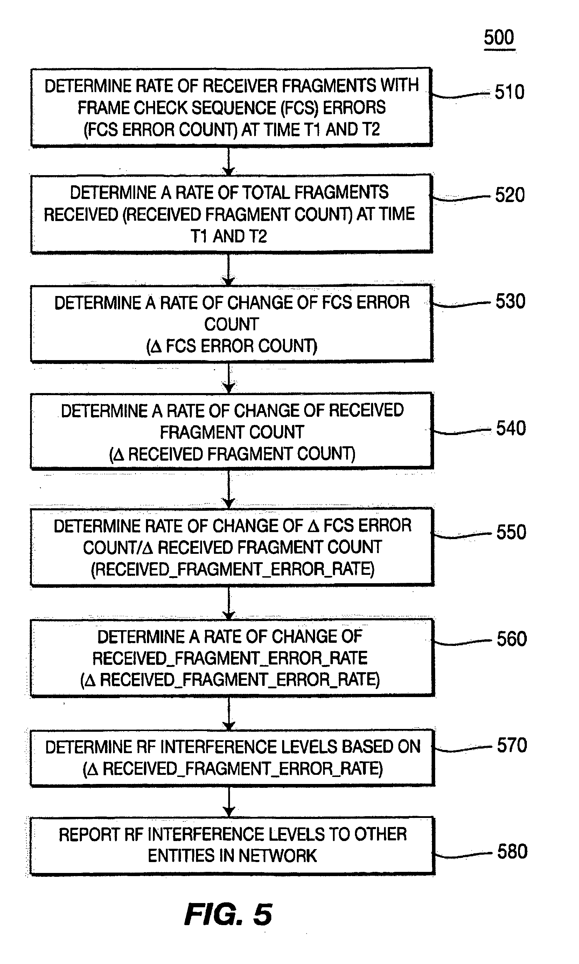

Figure 5 shows a flow diagram of a method (500) determining RF interference according to another example useful for understanding the invention. First a processor with in the STA or AP determines a rate of received fragments with fragment count system (FCS) errors (FCSErrorCount) (510). At the same time, the processor determines a rate of total fragments received (ReceivedFragmentCount) (520). Then the processor determines the rate of change of the FCSErrorCount (ΔFCSErrorCount) (530). At the same time, the processor also determines a rate of change of the ReceivedFragmentCount (ΔReceivedFragmentCount) (540). Next, the processor determines the ratio of ΔFCSErrorCount to ΔReceivedFragmentCount (550). The ratio of these deltas represents the received fragment error rate. Then the processor determines a rate of change of the ratio of ΔFCSErrorCount to ΔReceivedFragmentCount (Δ[AFCSErrorCount /ΔReceivedFragmentCount]) (560). Finally, the processor determines the RF interference levels based on the Δ[AFCSErrorCount/ ΔReceivedFragmentCount] (570).

A **sudden increase in the received** Δ[ΔFCSErrorCount/ΔReceivedFragmentCount] indicates the onset of a new RF **interference at that STA or AP. If the difference in** Δ[ΔFCSErrorCount/ΔReceivedFragmentCount] is greater (increasing received fragment error rate) than a selected threshold value (in dB) for a selected time window, then RF interference onset is detected at that STA or AP. If the difference in the Δ[ΔFCSErrorCount/ΔReceivedFragmentCount] is less (decreasing received fragment error rate) than a selected threshold value (in -dB) for a selected time window (measurement time for recent received fragment error rate less-measurement time for older the received fragment error rate), RF interference termination is detected at that STA. Optionally, the detection of RF interference onset, or termination of RF interference, may be reported to at least one other network entity, at 580.

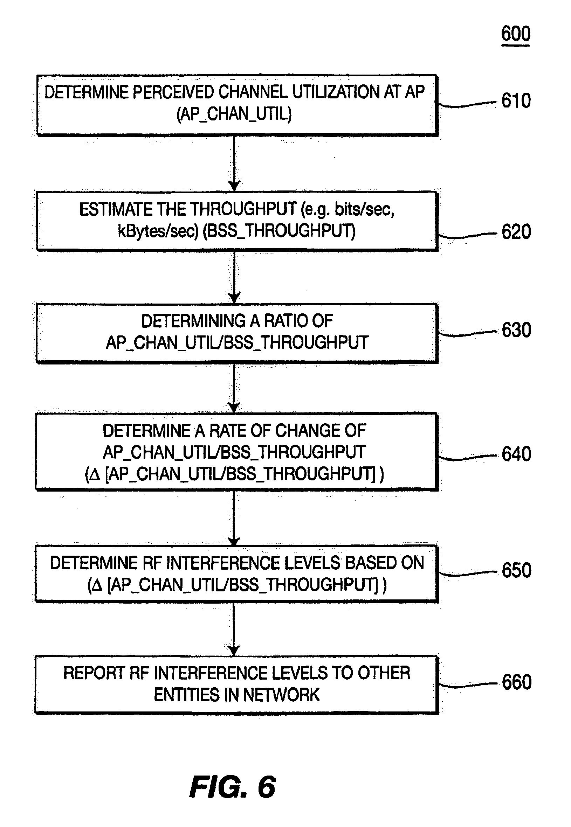

Figure 6 shows a flow diagram of a method for determining RF interference by measuring the rate of change of a BSS channel overhead performance metric. A high value for channel utilization divided by BSS throughput indicates high channel overhead and inefficient BSS operation. Therefore, the AP's channel utilization (AP_Chan_Util) is determined, at 610. Then the AP determines a BSS Throughput (BSS_Throughput) by determining a total number of fragments transmitted and received in over a predetermined period of time, at 620. Next the AP determines the ratio of the AP_Chan_Util to BSS_Throughput (AP_Chan_Util/BSS_Throughput), at 630. Then the AP determines a rate of change of the AP_Chan_Util/BSS_Throughput, (Δ [AP_Chan_Util/BSS_Throughput]) at 640. Finally, the AP determines RF interference based on the Δ[AP_Chan_Util/BSS_Throughput], at 650. A sudden increase in the AP_Chan_Util/BSS_Throughput, or BSS channel overhead, indicates the onset of a new RF interference at that AP.

Alternatively, instead of monitoring the rate of change the AP may compare the AP_Chan_Util/BSS_Throughput to a predetermined threshold value. If the difference in the BSS channel overhead is greater (increasing BSS channel overhead) than a selected threshold value (in dB) for a selected time period, then RF interference onset is detected at that AP. If the difference in the BSS channel overhead is less than the predetermined threshold for a selected time window, then RF interference termination is detected at that AP. Optionally, the RF interference may be reported by the AP to the STAs in the BSS or to some other network entity, at 660.

It should be noted that with any of the methods described above certain measurements may need to be transmitted to the STAs in the BSS. For example, the metrics which may need to be transmitted to the STAs include AP_ANPI, AP_Chan_Util, and AP_MAD.

Although the features and elements of the present embodiments and examples are described in particular combinations, each feature or element can be used alone without the other features and elements of the other embodiments or in various combinations with or without other features and elements of the present embodiments and examples. The methods or flow charts provided herewith may be implemented in a computer program, software, or firmware tangibly embodied in a computer-readable storage medium for execution by a general purpose computer or a processor. Examples of computer-readable storage mediums include a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs).

Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), and/or a state machine.

A processor in association with software may be used to implement a radio frequency transceiver for use in a wireless transmit receive unit (WTRU), user equipment (UE), terminal, base station, radio network controller (RNC), or any host computer. The WTRU or STA may be used in conjunction with modules, implemented in hardware and/or software, such as a camera, a video camera module, a videophone, a speakerphone, a vibration device, a speaker, a microphone, a television transceiver, a hands free headset, a keyboard, a Bluetooth® module, a frequency modulated (FM) radio unit, a liquid crystal display (LCD) display unit, an organic light-emitting diode (OLED) display unit, a digital music player, a media player, a video game player module, an Internet browser, and/or any wireless local area network (WLAN) module.

## Claims

1. A method for measuring interference at a station, STA, comprising:
measuring a perceived idle channel noise power value associated with the STA over a plurality of measurement periods;
calculating a difference value between two of the idle channel noise power values; and
determining that radio frequency, RF, interference is detected on a condition that the difference value is greater than a threshold.

2. The method according to claim 1, wherein the calculating includes:
storing the idle channel noise power values; and
comparing older idle channel noise power values to a newer idle channel noise power value to determine the difference value.

3. The method according to claim 1, further comprising:
reporting the RF interference detection to an access point or other network entity.

4. The method according to claim 1, wherein on a condition that the difference value is less than a second threshold, determining that the RF interference has terminated.

5. The method according to claim 4, further comprising:
reporting the RF interference termination to an access point or other network entity.

6. A wireless station, STA, comprising:
a transmitter;
a receiver;
a buffer; and
a processor in communication with the transmitter, the receiver, and the buffer, the processor configured to:
measure a perceived idle channel noise power value associated with the STA over a plurality of measurement periods;
calculate a difference value between two of the idle channel noise power values; and
determine that radio frequency, RF, interference is detected on a condition that the difference value is greater than a threshold.

7. The wireless STA according to claim 6,
wherein the processor is further configured to:
store the idle channel noise power values; and
compare older idle channel noise power values to a newer idle channel noise power value to determine the difference value.

8. The wireless STA according to claim 6, wherein the processor is further configured to report the RF interference detection to an access point or other network entity.

9. The wireless STA according to claim 6, wherein the processor is further configured to determine that the RF interference has terminated on a condition that the difference value is less than a second threshold.

10. The wireless STA according to claim 9, wherein the processor is further configured to report the RF interference termination to an access point or other network entity.

## Patentansprüche

1. Verfahren zum Messen von Interferenzen an einer Station, STA, wobei das Verfahren Folgendes umfasst:
Messen eines wahrgenommenen Leerlaufkanalrauschleistungswertes, der zu der STA gehört, über mehrere Messungszeiträume;
Berechnen eines Differenzwertes zwischen zwei der Leerlaufkanalrauschleistungswerte; und
Bestimmen, dass Hochfrequenz (HF)-Interferenzen detektiert werden, unter einer Bedingung, dass der Differenzwert größer ist als eine Schwelle.

2. Verfahren nach Anspruch 1, wobei das Berechnen Folgendes enthält:
Speichern der Leerlaufkanalrauschleistungswerte; und
Vergleichen älterer Leerlaufkanalrauschleistungswerte mit einem neueren Leerlaufkanalrauschleistungswert, um den Differenzwert zu bestimmen.

3. Verfahren nach Anspruch 1, das des Weiteren Folgendes umfasst:
Berichten der Detektion von HF-Interferenzen an einen Zugangspunkt oder eine andere Netzentität.

4. Verfahren nach Anspruch 1, wobei unter einer Bedingung, dass der Differenzwert kleiner ist als eine zweite Schwelle, bestimmt wird, dass die HF-Interferenzen beendet sind.

5. Verfahren nach Anspruch 4, das des Weiteren Folgendes umfasst:
Berichten der Beendigung der HF-Interferenzen an einen Zugangspunkt oder eine andere Netzentität.

6. Drahtlosstation (Drahtlos-STA), die Folgendes umfasst:
einen Sender;
einen Empfänger;
einen Puffer; und
einen Prozessor, der mit dem Sender, dem Empfänger und dem Puffer kommuniziert, wobei der Prozessor dafür konfiguriert ist:
einen wahrgenommenen Leerlaufkanalrauschleistungswert, der zu der STA gehört, über mehrere Messungszeiträume zu messen;
einen Differenzwert zwischen zwei der Leerlaufkanalrauschleistungswerte zu messen; und
unter einer Bedingung, dass der Differenzwert größer ist als eine Schwelle, zu bestimmen, dass Hochfrequenz (HF)-Interferenzen detektiert werden.

7. Drahtlos-STA nach Anspruch 6,
wobei der Prozessor des Weiteren dafür konfiguriert ist:
die Leerlaufkanalrauschleistungswerte zu speichern; und
ältere Leerlaufkanalrauschleistungswerte mit einem neueren Leerlaufkanalrauschleistungswert zu vergleichen, um den Differenzwert zu bestimmen.

8. Drahtlos-STA nach Anspruch 6, wobei der Prozessor des Weiteren dafür konfiguriert ist, die Detektion von HF-Interferenzen an einen Zugangspunkt oder eine andere Netzentität zu berichten.

9. Drahtlos-STA nach Anspruch 6, wobei der Prozessor des Weiteren dafür konfiguriert ist, unter einer Bedingung, dass der Differenzwert kleiner ist als eine zweite Schwelle, zu bestimmen, dass die HF-Interferenzen beendet sind.

10. Drahtlos-STA nach Anspruch 9, wobei der Prozessor des Weiteren dafür konfiguriert ist, die Beendigung der HF-Interferenzen an einen Zugangspunkt oder eine andere Netzentität zu berichten.

## Revendications

1. Procédé pour mesurer une interférence à une station, STA, comprenant :
la mesure d'une valeur de puissance de bruit de canal inactif perçu associée à la STA sur une pluralité de périodes de mesure ;
le calcul d'une valeur de différence entre deux des valeurs de puissance de bruit de canal inactif ; et
la détermination qu'une interférence de radiofréquences, RF, est détectée à condition que la valeur de différence soit supérieure à un seuil.

2. Procédé selon la revendication 1, dans lequel le calcul comprend :
la mémorisation des valeurs de puissance de bruit de canal inactif ; et
la comparaison d'anciennes valeurs de puissance de bruit de canal inactif à une nouvelle valeur de puissance de bruit de canal inactif pour déterminer la valeur de différence.

3. Procédé selon la revendication 1, comprenant en outre :
le rapport de la détection d'interférence RF à un point d'accès ou à une autre entité de réseau.

4. Procédé selon la revendication 1, comprenant en outre, à condition que la valeur de différence soit inférieure à un deuxième seuil, la détermination que l'interférence RF est terminée.

5. Procédé selon la revendication 4, comprenant en outre :
le rapport de la terminaison d'interférence RF à un point d'accès ou à une autre entité de réseau.

6. Station sans fil, STA, comprenant :
un émetteur ;
un récepteur ;
une mémoire tampon ; et
un processeur en communication avec l'émetteur, le récepteur et la mémoire tampon, le processeur étant configuré pour effectuer :
la mesure d'une valeur de puissance de bruit de canal inactif perçu associée à la STA sur une pluralité de périodes de mesure ;
le calcul d'une valeur de différence entre deux des valeurs de puissance de bruit de canal inactif ; et
la détermination qu'une interférence de radiofréquences, RF, est détectée à condition que la valeur de différence soit supérieure à un seuil.

7. STA sans fil selon la revendication 6,
dans laquelle le processeur est en outre configuré pour effectuer :
la mémorisation des valeurs de puissance de bruit de canal inactif ; et
la comparaison d'anciennes valeurs de puissance de bruit de canal inactif à une nouvelle valeur de puissance de bruit de canal inactif pour déterminer la valeur de différence.

8. STA sans fil selon la revendication 6, dans laquelle le processeur est en outre configuré pour effectuer le rapport de la détection d'interférence RF à un point d'accès ou à une autre entité de réseau.

9. STA sans fil selon la revendication 6, dans laquelle le processeur est en outre configuré pour effectuer la détermination que l'interférence RF est terminée à condition que la valeur de différence soit inférieure à un deuxième seuil.

10. STA sans fil selon la revendication 9, dans laquelle le processeur est en outre configuré pour effectuer le rapport de la terminaison d'interférence RF à un point d'accès ou à une autre entité de réseau.
